# EUROPEAN PATENT APPLICATION

(11) **EP 4 835 708 A1**
(43) Date of publication of application: **04.11.2026**
(21) Application number: 26172188.0
(22) Date of filing: 14.04.2026
(51) Int. Cl.: G06F 21/57, H04L 9/40

(54) **SYSTEMS AND METHODS FOR MANAGING SOFTWARE VULNERABILITY WITH A SOFTWARE DEPLOYMENT SYSTEM**

(30) Priority: 30.04.2025 US 202563797827 P; 12.06.2025 US 202519236009
(71) Applicant: Palantir Technologies Inc., Aventura, Florida 33180 (US)
(72) Inventor: WINDHEUSER, Fabian, Aventura, 33180 (US); NIEMI, Richard, Aventura, 33180 (US); GOGHARI, Aashman, Aventura, 33180 (US); TSANG, Vivian, Aventura, 33180 (US); ONCELAY, Julien Deniz, Aventura, 33180 (US); PINTO, Tyler, Aventura, 33180 (US)
(74) Representative: Jolliffe, Jack Louis

(57) **Abstract**

According to some embodiments, systems and methods for the present disclosure are directed to managing software vulnerability. In certain embodiments, a method for managing software vulnerability includes the steps of: receiving a plurality of vulnerability scan results associated with a plurality of software releases, each vulnerability scan result including one or more indications of one or more scanned vulnerabilities and one or more indications of one or more software releases; obtaining software installation information associated with a plurality of software installations in a plurality of environments, the plurality of software installations being associated with the plurality of software releases; updating a plurality of software vulnerabilities based on the plurality of vulnerability scan results and the software installation information.

## Description

This application claims the benefit of U.S. Provisional Application No. 63/797,827, filed April 30, 2025.

### TECHNICAL FIELD

Certain embodiments of the present disclosure relate to software vulnerability management. More particularly, some embodiments of the present disclosure relate to software vulnerability management across multiple software products.

### BACKGROUND

Software vulnerability is often discovered daily. In some examples, it is challenging for an organization to detect and handle software vulnerabilities that are uncovered. In certain examples, a software vulnerability is a weakness in a piece of software or a software system that can be exploited by an attacker to cause harm. For example, a software vulnerability, if not handled properly, may cause a software virus to spread in computing systems in an organization. As an example, software vulnerabilities, if not handled properly, may cause computing systems to malfunction in organizations.

Hence, it is desirable to improve techniques for performing software vulnerability management.

### SUMMARY

Certain embodiments of the present disclosure relate to software vulnerability management. More particularly, some embodiments of the present disclosure relate to software vulnerability management across multiple software releases.

According to some embodiments, a method for managing software vulnerability, the method includes the steps of: receiving a plurality of vulnerability scan results associated with a plurality of software releases, each vulnerability scan result including one or more indications of one or more scanned vulnerabilities and one or more indications of one or more software releases; obtaining software installation information associated with a plurality of software installations in a plurality of environments, the plurality of software installations being associated with the plurality of software releases; updating a plurality of software vulnerabilities based on the plurality of vulnerability scan results and the software installation information, each software vulnerability of the plurality of software vulnerabilities including a vulnerability identifier, a software release identifier, and an environment identifier; receiving a query from a user; selecting a subset of software vulnerabilities from the plurality of software vulnerabilities based on the query; and generating a response including a representation of the selected subset of software vulnerabilities. In certain embodiments, the method is performed using one or more processors.

According to certain embodiments, a system for managing software vulnerability, the system includes: one or more processors; and one or more memories storing instructions that, when executed by the one or more processors, cause the system to perform a set of operations, the set of operations comprising: receiving a plurality of vulnerability scan results associated with a plurality of software releases, each vulnerability scan result including one or more indications of one or more scanned vulnerabilities and one or more indications of one or more software releases; obtaining software installation information associated with a plurality of software installations in a plurality of environments, the plurality of software installations being associated with the plurality of software releases; updating a plurality of software vulnerabilities based on the plurality of vulnerability scan results and the software installation information, each software vulnerability of the plurality of software vulnerabilities including a vulnerability identifier, a software release identifier, and an environment identifier; receiving a query from a user; selecting a subset of software vulnerabilities from the plurality of software vulnerabilities based on the query; and generating a response including a representation of the selected subset of software vulnerabilities.

At least some aspects of the present disclosure are directed to a non-transitory computer-readable storage medium having instructions for managing software vulnerability that, when executed by one or more processors, cause the one or more processors to perform a set of operations comprising: receiving a plurality of vulnerability scan results associated with a plurality of software releases, each vulnerability scan result including one or more indications of one or more scanned vulnerabilities and one or more indications of one or more software releases; obtaining software installation information associated with a plurality of software installations in a plurality of environments, the plurality of software installations being associated with the plurality of software releases; updating a plurality of software vulnerabilities based on the plurality of vulnerability scan results and the software installation information, each software vulnerability of the plurality of software vulnerabilities including a vulnerability identifier, a software release identifier, and an environment identifier; receiving a query from a user; selecting a subset of software vulnerabilities from the plurality of software vulnerabilities based on the query; and generating a response including a representation of the selected subset of software vulnerabilities.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 is a simplified diagram showing a method for managing software vulnerability according to certain embodiments of the present disclosure.
FIG. 2 is a simplified diagram showing a method for managing software security or vulnerability according to certain embodiments of the present disclosure.
FIG. 3 is a simplified diagram showing a method for managing software security or vulnerability according to certain embodiments of the present disclosure.
FIG. 4 is an illustrative example of a software architecture integrating software security management and software supply chain management according to certain embodiments of the present disclosure.
FIG. 5 is an illustrative example of a vulnerability management environment, according to certain embodiments of the present disclosure.
FIG. 6 illustrates an example user interface for presenting software vulnerabilities according to certain embodiments of the present disclosure.
FIG. 7 illustrates an example user interface for presenting software vulnerabilities according to certain embodiments of the present disclosure.
FIG. 8 is a simplified diagram showing a computing system for implementing a system for managing software vulnerability in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods often lack an efficient way to manage software vulnerabilities uncovered. For example, conventional systems and methods cannot evaluate the impacts of a software vulnerability across multiple software installations in multiple environments (e.g., runtime environments, etc.). As an example, conventional systems and methods cannot evaluate the impacts of a software vulnerability across multiple software releases in multiple environments. In some examples, the conventional systems do not have a way to continuously monitor the status of a software vulnerability impacting multiple software releases and/or multiple runtime environments.

Various embodiments of the present disclosure can achieve benefits and/or improvement over conventional systems by a computing system managing software vulnerabilities using software deployment information. In certain embodiments, benefits include improved software security using a computing system that can manage software vulnerabilities across multiple software releases, multiple software products, multiple software artifacts, multiple installations, and/or multiple environments. In some embodiments, benefits include improved efficiency of a computing system for managing software vulnerabilities across multiple software releases, multiple software products, multiple software artifacts, multiple installations, and/or multiple environments. In certain embodiments, a software release refers to a version of a software product installed in a runtime environment. In some embodiments, a software artifact refers to a software component (e.g., a software module, a software microservice, a software service, etc.) that is a part of the software product. In certain embodiments, a software installation refers to a software product installed in a runtime environment. Additional and/or alternative benefits should be recognized by those of ordinary skill in the art, at least in light of the teachings provided herein.

According to certain embodiments, a vulnerability management system (e.g., a software application, a software module, a software system, etc.) is configured to manage software vulnerabilities for software systems on a massive scale, which deploys numerous service releases across a multitude of environments. In some embodiments, the complexity of vulnerability management is compounded by the critical need to maintain robust security and compliance standards. In some embodiments, organizations must monitor vulnerabilities identified in software releases to ensure that no software with vulnerabilities exceeding some requirements (e.g., service level agreements (SLAs), etc.) is operated in environments subject to compliance restrictions. In certain embodiments, developers and security operators need to maintain an overview of the continuously growing number of identified vulnerabilities, to swiftly identify a plurality of software releases or environments affected by a specific vulnerability, and/or to assess the overall security risk for an organization.

According to some embodiments, the challenges lie in the number of releases, the number of environments, and the number of vulnerability findings, which makes it difficult to manage and analyze a large amount of data effectively. In certain embodiments, the vulnerability scan data is large in data volume and/or constantly changing, for example, with new software releases being produced and new vulnerabilities being identified on a daily basis. In some embodiments, without a centralized and integrated solution, it becomes hard to assess the impact of vulnerabilities and conformance to compliance requirements, as well as the overall security risk that may impose an existential risk for an organization.

According to certain embodiments, a vulnerability management system (e.g., a software application, a software module, a software solution, etc.) is used with and/or integrated with a software deployment system. In some embodiments, the vulnerability management system provides a user interface designed to efficiently search and filter through vulnerabilities identified in installed software releases. In certain embodiments, this solution offers a comprehensive view of vulnerabilities, allowing users to explore all vulnerabilities affecting a single software release, those impacting all releases within a specific environment, or those affecting releases across all environments. In some embodiments, using the vulnerability management system, users can tailor their search and filtering options to surface data that is most specific to their needs, thereby addressing the challenges outlined above and discussed herein.

According to some embodiments, the vulnerability management system allows users to identify a part of or all releases and environments impacted by a particular vulnerability. In certain embodiments, this functionality is important (e.g., crucial) for evaluating the potential impact and risk of vulnerabilities across the organization and for compiling a list of areas requiring remediation.

According to certain embodiments, the vulnerability management system provides an overview (e.g., a heads-up view) of vulnerabilities affecting a specific environment or the organization as a whole. In some examples, this feature can be valuable for security operators, as it highlights vulnerabilities that must be addressed to maintain compliance and provides an overview of the overall risk landscape.

According to some embodiments, the vulnerability management system interfaces with and/or is integrated with a software deployment management system (e.g., a software deployment management platform, etc.) managing a plurality of software installations. In certain embodiments, the interface and/or integration facilitates end-to-end workflows, allowing users to initiate a search for a vulnerability, view linked environments or software releases affected by it, and then directly access detailed information and settings for those environments or releases. In some embodiments, this interconnected approach streamlines the process of vulnerability management, ensuring that users can efficiently navigate from identification to resolution. In certain embodiments, by addressing the challenges of managing high-scale software environments with a focus on security and compliance, the vulnerability management system offers a powerful tool for organizations to maintain control over the software ecosystems, ensuring that vulnerabilities are promptly identified and mitigated.

In certain embodiments, software security vulnerabilities become increasingly prominent within the software supply chain, so it is important (e.g., crucial) that organizations leverage automated mechanisms to action these vulnerabilities once discovered. In some embodiments, at least some embodiments of the present disclosure describe how generalized software vulnerability data, including data from virus scanners, vulnerability scanners, etc. can be leveraged within an operations system to control software deployment at scale. In certain embodiments, the software supply chain management system provides an operation platform, focused on enabling the efficient and centralized operations of software systems throughout the day-to-day operations and maintenance of the software.

According to certain embodiments, within highly regulated environments such as mission-critical and/or regulated environments, it is typical for the environment owner or regulator to require specific service level agreements (SLAs) on vulnerabilities to be remediated. In some embodiments, these SLAs play a role (e.g., a crucial role) in maintaining the various accreditations for software within the government and commercial spaces. In certain embodiments, automated alerting (e.g., using automated means of alerting) on and actioning vulnerabilities at scale is a key component of the ability to maintain these accreditations.

According to some embodiments, dealing with software vulnerabilities is not a new problem for software vendors, but managing that risk in production environments poses a number of challenges. In some embodiments, by implementing the software security system (e.g., the software security solution) within a software platform (e.g., integrated with a software supply chain system), the system is able to not only understand what software may be vulnerable, but also know exactly where that software is deployed, allowing us to take immediate action to mitigate risk. Furthermore, in certain embodiments, because the system knows what versions of software are deployed within those environments, the system can orchestrate additional vulnerability scans as time goes on, ensuring that the system catches any new vulnerabilities that may have popped up in the time since the deployment of the software.

According to certain embodiments, when these security vulnerabilities are discovered, the system can provide notifications, such as notifications to the teams responsible for the software itself and relevant security teams, and/or notifications to the owners of the environment that the software is deployed into. In some embodiments, this provides all teams within the development, security, and/or operation (DevSecOps) ecosystem a view into current risk posture and allows the system and/or the users to take immediate action based on this enhanced visibility.

According to some embodiments, the system uses catalog and manages vulnerabilities across software deployed via runtime environment instance. In certain embodiments, the software security can be a modular component for a software deployment and management system, for example, enabling users (e.g., customers) to select subscriptions (e.g., purchase capability) to integrate with their vulnerability scan data. In some embodiments, the system can also scan container images as a part of the security check. In certain embodiments, a container is a unit of software application that packages software code and the application's dependencies (e.g., software libraries) and/or software services to run the application. In some embodiments, a container image is a standalone, executable package of software that can run a software application, for example, including system libraries, system settings, and/or the like. In certain embodiments, a container image becomes a container (e.g., a containerized application) at runtime. In some embodiments, a software application is referred to as a software product.

According to certain embodiments, the system can support additional scanners for vulnerabilities, metadata types, and/or the like to obtain additional types of vulnerabilities that can be detected. Additionally, in some embodiments, the system can improve integration with various developers and build infrastructure platforms to automate the remediation of specific types of vulnerabilities.

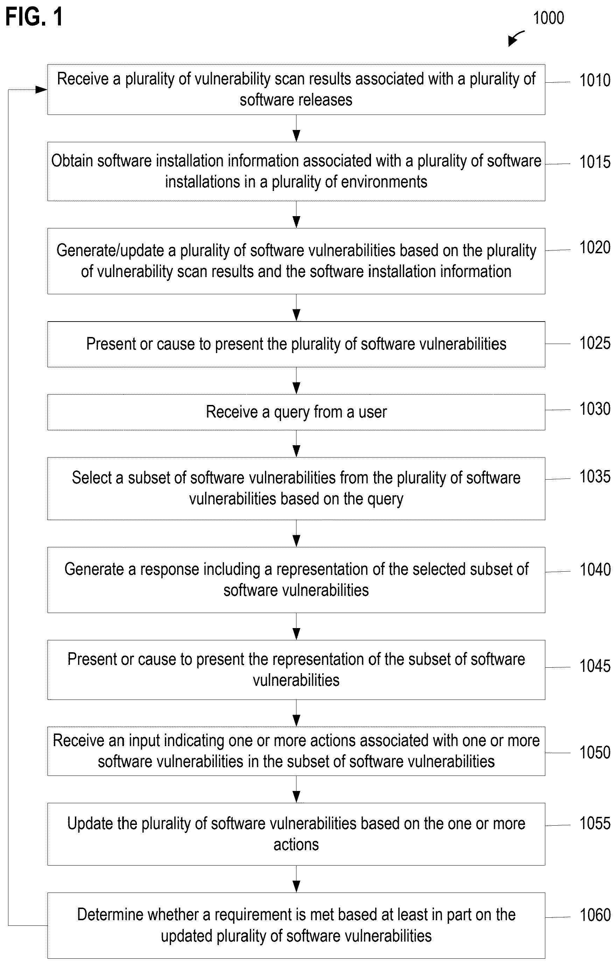

FIG. 1 is a simplified diagram showing a method 1000 for managing software vulnerability according to certain embodiments of the present disclosure. This diagram is merely an example. One of ordinary skill in the art would recognize many variations, alternatives, and modifications. The method 1000 for managing software vulnerability includes processes 1010-1060. Although the above has been shown using a selected group of processes for the method 1000 for managing software vulnerability, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 1000 are performed by a system (e.g., the computing system 800). In certain examples, some or all processes (e.g., steps) of the method 1000 are performed by a computer and/or a processor directed by a code. For example, a computer includes a server computer and/or a client computer (e.g., a personal computer). In some examples, some or all processes (e.g., steps) of the method 1000 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at process 1010, the system receives a plurality of vulnerability scan results associated with a plurality of software releases. In some embodiments, the plurality of vulnerability scan results is obtained by a plurality of vulnerability scans. In certain embodiments, the system stores the plurality of vulnerability scan results to a data repository. In some embodiments, a vulnerability scan result includes one or more indications of one or more scanned vulnerabilities, one or more indications of one or more software artifacts, one or more indications of one or more software releases, and/or the like. In certain embodiments, a scanned vulnerability is also referred to as a security vulnerability. In some embodiments, a scan result includes one or more security vulnerabilities, one or more assessment scores associated with the one or more security vulnerabilities, one or more requirements associated with the one or more security vulnerabilities, and/or one or more actions associated with the one or more security vulnerabilities.

In certain embodiments, the system obtains one or more assessment scores associated with the one or more scanned vulnerabilities. In some embodiments, the assessment score is a CVE (Common Vulnerability Exposure) score. In certain embodiments, the assessment score is retrieved from a database (e.g., a database of an organization). For example, the assessment score has a score range that includes a low score representing the least critical vulnerability and a high score representing the most critical vulnerability.

According to some embodiments, at process 1015, the system obtains software installation information associated with a plurality of software installations in a plurality of environments. In certain embodiments, the plurality of software installations are associated with the plurality of software releases. For example, a software installation indicates a software release installed in a runtime environment. In some embodiments, the software installation information is obtained from a software deployment system.

According to certain embodiments, at process 1020, the system generates and/or updates a plurality of software vulnerabilities based on the plurality of vulnerability scan results and the software installation information. In certain embodiments, each software vulnerability of the plurality of software vulnerabilities includes a vulnerability identifier, a software release identifier, and an environment identifier. In some embodiments, a vulnerability identifier includes a vulnerability code (e.g., a CVE code, etc.) that is a part of a scanned vulnerability, for example, from a scanner. In certain embodiments, a software release identifier includes a link to a software release and/or a software product from the software deployment system.

According to some embodiments, at process 1025, the system presents and/or causes to present the plurality of software vulnerabilities. In certain embodiments, at process 1030, the system receives a query from a user. In some embodiments, at process 1035, the system selects a subset of software vulnerabilities from the plurality of software vulnerabilities based on the query.

In certain embodiments, the query includes an indicator of a software release or an environment. In some embodiments, the system selects the subset of software vulnerabilities based at least in part on the software release or the environment. In certain embodiments, a software release is impacted by a scanned vulnerability if a software artifact in the software release is impacted by the scanned vulnerability. In some embodiments, a runtime environment is impacted if at least one software release in the runtime environment is impacted. In certain embodiments, the system identifies one or more software releases that are impacted by the scanned vulnerability based at least in part on the plurality of scan results. In some embodiments, a representation of a software vulnerability includes a vulnerability identifier, a description, a severity indicator, a number of impacted software releases, a number of impacted environments and/or the like.

In some embodiments, the query includes a severity rating. In certain embodiments, a security rating includes at least one selected from a critical rating, a high rating, a medium rating, a low rating, and/or the like. In some embodiments, a security rating is determined based on one or more assessment scores. In some embodiments, the system selects the subset of software vulnerabilities based at least in part on the severity rating.

According to certain embodiments, at process 1040, the system generates a response including a representation of the selected subset of software vulnerabilities. In some embodiments, at process 1045, the system presents or causes to present the representation of the subset of software vulnerabilities. In certain embodiments, the system generates a representation of a software vulnerability. In some embodiments, the representation of a software vulnerability includes a vulnerability identifier, a description, a severity indicator, a number of impacted resources, and/or the like. In certain embodiments, a number of impacted resources includes a number of software releases, a number of impacted environments, and/or the like.

In certain embodiments, a representation of a software vulnerability includes a vulnerability status. In some embodiments, the vulnerability status includes at least one selected from an indication of a number of active vulnerabilities associated with a software vulnerability, an indication of a number of pending suppression actions associated with a software vulnerability, and a number of a type of action taken associated with a software vulnerability. In certain embodiments, the subset of software vulnerabilities includes a first software vulnerability and a second software vulnerability. In some examples, the first software vulnerability includes a first vulnerability identifier and a first software release identifier. In certain examples, the second software vulnerability includes the first vulnerability identifier and a second software release identifier. In some examples, the first software release identifier is different from the second software release identifier.

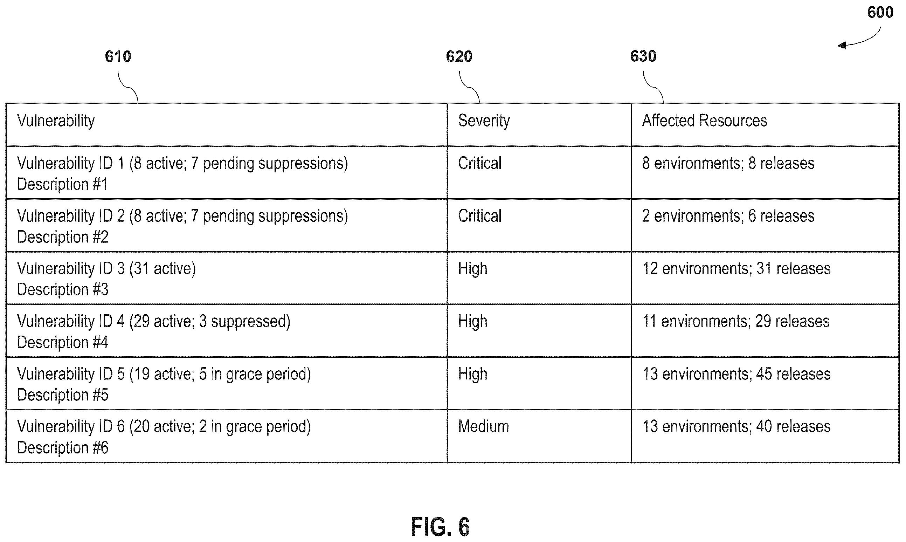

FIG. 6 illustrates an example user interface 600 for presenting software vulnerabilities according to certain embodiments of the present disclosure. FIG. 6 is merely an example. One of ordinary skill in the art would recognize many variations, alternatives, and modifications. In the example illustrated, a list of representations of software vulnerabilities is presented at the user interface 600. In some examples, the representation of a software vulnerability includes a set of vulnerability information 610, a severity indicator 620, and a summary of affected resources 630. In certain examples, the set of vulnerability information 610 includes a vulnerability identifier, a description, and one or more vulnerability statuses. For example, a vulnerability status includes a number of active vulnerabilities that have not been addressed, a number of pending suppression actions, a number of suppression actions that have caused the vulnerability to be suppressed, a number of vulnerabilities in grace period, a number of vulnerabilities that are overdue, and/or the like. In some examples, the summary of affected resources 630 includes a number of impacted software releases, a number of impacted environments, and/or the like.

According to some embodiments, a user can provide input and/or make a selection from the user interface. For example, a user can select a software vulnerability, and the system can generate more detailed information about the software vulnerability. As an example, a user can select a software release and/or a runtime environment, and the system can generate more detailed information about the software release and/or the runtime environment. For example, the system can generate a list of software vulnerabilities that impact the software release and/or the runtime environment.

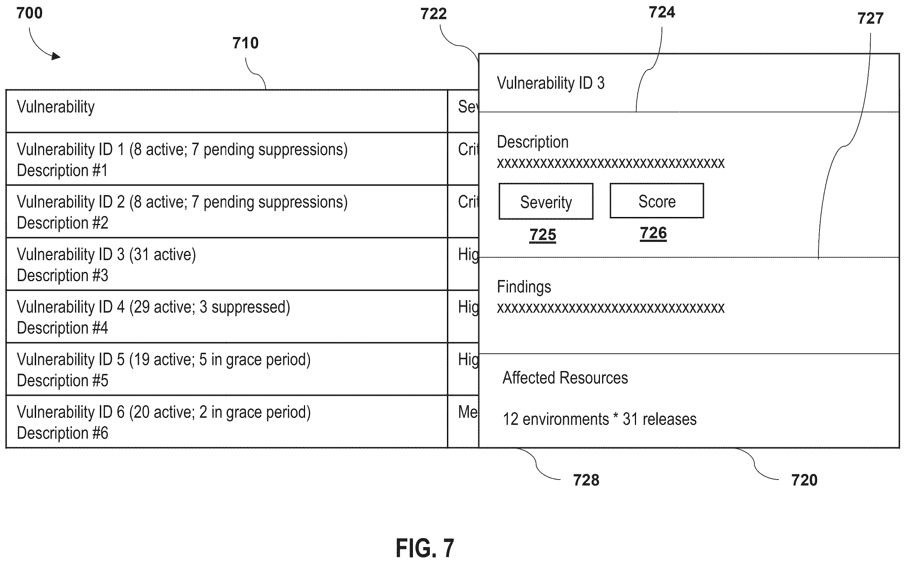

FIG. 7 illustrates an example user interface 700 for presenting software vulnerabilities 710 according to certain embodiments of the present disclosure. FIG. 7 is merely an example. One of ordinary skill in the art would recognize many variations, alternatives, and modifications. In the example illustrated, the system provides more detailed information about the software vulnerability. For example, the system provides the representation 720 of the software vulnerability in response to selecting the software vulnerability. As an example, the representation 720 of the software vulnerability is overlayed on the list of software vulnerabilities 710. In some examples, the representation 720 of the software vulnerability includes a vulnerability identifier 722, a vulnerability description 724, a severity indicator 725, an assessment score 726, one or more findings 727, and a summary of affected resources 728.

In some examples, scanners run on regular cadence and identify specific vulnerabilities that are present in artifacts that are part of the software releases. In certain examples, this is determined by checking the artifacts which are defined as part of the software release manifest. In some embodiments, one or more instances of vulnerabilities in a specific context are called findings. In certain embodiments, the system provides aggregate access to findings across a software product, a runtime environment, one or more software installations, and/or the like. In some embodiments, the system uses suppression workflows to mute one or more findings at a time, based on the characteristic of the finding that will be surfaced in successive scans. In certain examples, the system can select a software release to view the affected artifacts, the vulnerable versions, and a fix version if one is available.

Referring back to FIG. 1, according to some embodiments, at process 1050, the system receives an input indicating one or more actions associated with one or more software vulnerabilities in the subset of software vulnerabilities. In certain embodiments, an action includes at least one selected from a group consisting of a recall action, a suppression action, a patch action, and an upgrade action. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, the system performs and/or causes to perform at least a part of the one or more actions. In some embodiments, the input includes an indication of a plurality of impacted software releases. In certain embodiments, the system causes the action to be taken on the plurality of impacted software releases. In some embodiments, the input includes an indication of an impacted software artifact. In certain embodiments, the system causes the action to be taken on a plurality of impacted software releases, where each impacted software release of the plurality of impacted software releases includes the impacted software artifact.

In some embodiments, the input further includes an indication of an impacted environment. In certain embodiments, the system causes the action to be taken on a plurality of impacted software releases, each impacted software release of the plurality of impacted software releases being associated with a specified software vulnerability, each impacted software release of the plurality of impacted software releases being hosted in the impacted environment. In certain embodiments, the input includes a specific action to be applied to a software vulnerability and a justification of the specific action. In certain embodiments, the input includes a specific action to be applied to a software vulnerability and a scope of the specific action. In some examples, the scope of an action can be one or more environments, one or more software releases, one or more software artifacts, and/or the like. For example, the input includes a suppression action for a software vulnerability and an environment, and the system applies the suppression action to impacted software releases identified in the environment.

In some embodiments, the system receives a first input indicating a first action associated with a first software vulnerability. In certain embodiments, the system receives a second input indicating a second action associated with the second software vulnerability. In some embodiments, the first action is different from the second action.

According to certain embodiments, at process 1055, the system updates the plurality of software vulnerabilities based on the one or more actions. In some embodiments, the system receives a completion of an action in a scope and updates the plurality of software vulnerabilities accordingly. In certain embodiments, the system receives a failure of an action in a scope and updates the plurality of software vulnerabilities accordingly.

According to some embodiments, the system receives and/or accesses one or more requirements. For example, a requirement is a compliance requirement. In certain embodiments, at process 1060, the system determines whether a requirement is met based at least in part on the updated plurality of software vulnerabilities. In some embodiments, the system goes back to the process 1010 to continuously receive new and/or additional scan results. In certain embodiments, a requirement includes a requirement associated with an SLA requirement, for example, a clause in the SLA. In some embodiments, the requirement includes a requirement associated with a runtime environment. In certain embodiments, the requirement includes a contractual requirement. In some embodiments, the requirement includes a regulatory requirement. In certain embodiments, the requirement includes a parameter indicative of a permitted time period to address a vulnerability.

In some embodiments, the requirement includes a parameter indicative of a permitted time period to address a vulnerability for a corresponding assessment score. In certain examples, the requirement includes a first time period for addressing a vulnerability at a first assessment score and a second time period, different from the first time period, for addressing the vulnerability at a second assessment score. In some examples, the first assessment score is indicative of higher criticality for the vulnerability than the second assessment score, and the first time period is shorter than the second time period.

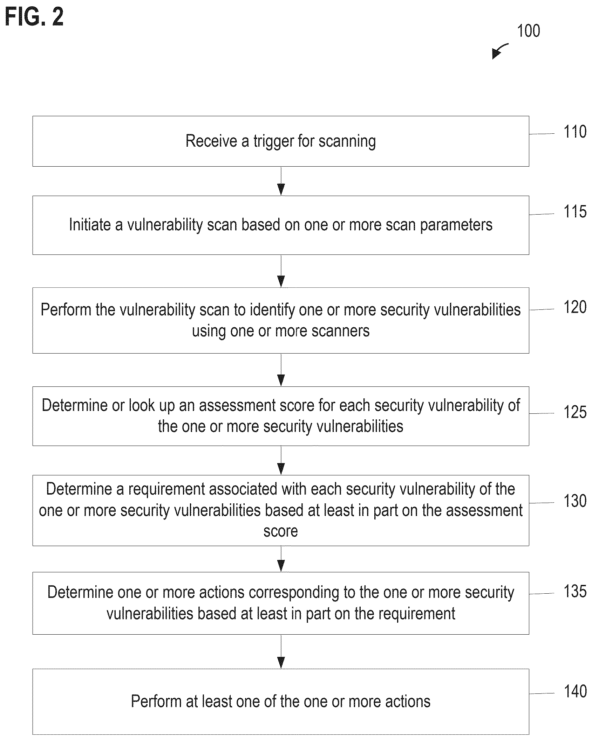

FIG. 2 is a simplified diagram showing a method 100 for managing software security or vulnerability according to certain embodiments of the present disclosure. This diagram is merely an example. One of ordinary skill in the art would recognize many variations, alternatives, and modifications. The method 100 for managing software security includes processes 110, 115, 120, 125, 130, 135, and 140. Although the above has been shown using a selected group of processes for the method 100 for managing software security, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 100 are performed by a system (e.g., the computing system 800). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 110, the system receives a trigger for scanning. In certain embodiments, the trigger is a new version of a software product that becomes available. In some embodiments, the trigger is a new deployment of a software product. In certain embodiments, the trigger is a new security vulnerability being discovered, where the new security vulnerability is associated with a software artifact known to be used in a software product. In some embodiments, a software product has a list of software artifacts corresponding to a version and/or a deployment instance. In certain embodiments, software artifacts are software components incorporated into a software product. In some embodiments, the list of software artifacts is generated based at least in part on a container image. In certain embodiments, the list of software artifacts is generated by software registration. In some embodiments, the trigger is a trigger by a time associated with periodic scanning (e.g., every day, every week).

According to certain embodiments, at process 115, the system initiates a vulnerability scan to a software product based on one or more scan parameters. In some embodiments, the vulnerability scan is conducted to a plurality of runtime instances of the software product. In certain embodiments, the one or more scanning parameters include a timing parameter, an environment parameter, a product parameter, and/or the like. In some embodiments, a timing parameter includes, for example, a frequency of scanning, a minimum interval between two adjacent scans, and/or the like. In certain embodiments, the environment parameter includes a parameter associated with a runtime environment (e.g., a testing environment, a production environment, a developer environment, etc.). In some embodiments, the product parameter includes a parameter associated with the software product (e.g., version).

According to some embodiments, at process 120, the system performs the vulnerability scan on the software product to identify one or more security vulnerabilities using one or more scanners. In certain embodiments, the one or more scanners include a scanner for container images, a scanner for software dependencies, a scanner for malware, and/or the like. In some embodiments, the one or more scanners include a scanner integrated with an instance of the software product. In certain embodiments, the one or more scanners include a scanner integrated with an instance of the software product in a runtime environment.

According to certain embodiments, at process 125, the system determines or looks up an assessment score for each security vulnerability of the one or more security vulnerabilities. In some embodiments, the assessment score is a CVE (Common Vulnerability Exposure) score. In certain embodiments, the assessment score is retrieved from a database (e.g., a database of an organization). For example, the assessment score has a score range including a low score representing least critical vulnerability and a high score representing most critical vulnerability.

According to some embodiments, at process 130, the system determines a requirement associated with each security vulnerability of the one or more identified security vulnerabilities based at least in part on the assessment scores. In certain embodiments, the requirement includes a requirement associated with an SLA requirement, for example, a clause in the SLA. In some embodiments, the requirement includes a requirement associated with a runtime environment. In certain embodiments, the requirement includes a contractual requirement. In some embodiments, the requirement includes a regulatory requirement. In certain embodiments, the requirement includes a parameter indicative of a permitted time period to address a vulnerability.

In some embodiments, the requirement includes a parameter indicative of a permitted time period to address a vulnerability for a corresponding assessment score. In certain examples, the requirement includes a first time period for addressing a vulnerability at a first assessment score and a second time period, different from the first time period, for addressing the vulnerability at a second assessment score. In some examples, the first assessment score is indicative of higher criticality for the vulnerability than the second assessment score, and the first time period is shorter than the second time period.

In certain embodiments, the system determines a requirement based in part on an assessment score associated with an identified security vulnerability. In some embodiments, the system determines a first requirement associated with a first identified security vulnerability and a second requirement associated with a second identified security vulnerability, where the second requirement is different from the first requirement. In certain embodiments, the system determines a first requirement associated with a security vulnerability at a first assessment score and a second requirement associated with the security vulnerability at a second assessment score, where the second requirement is different from the first requirement. In some embodiments, the second requirement is different from the first requirement in a required time for an action to be taken.

According to some embodiments, at process 135, the system determines one or more actions (e.g., remedial actions) corresponding to the one or more identified security vulnerabilities based at least in part on the requirements. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, at process 140, the system performs at least one of one or more actions corresponding to the one or more identified security vulnerabilities. In some embodiments, the system performs one or more actions at one or more runtime instances of the software product. In certain embodiments, the system performs a first action to a first runtime instance of the software product and a second action to a second runtime instance of the software product, where the first action is different from the second action.

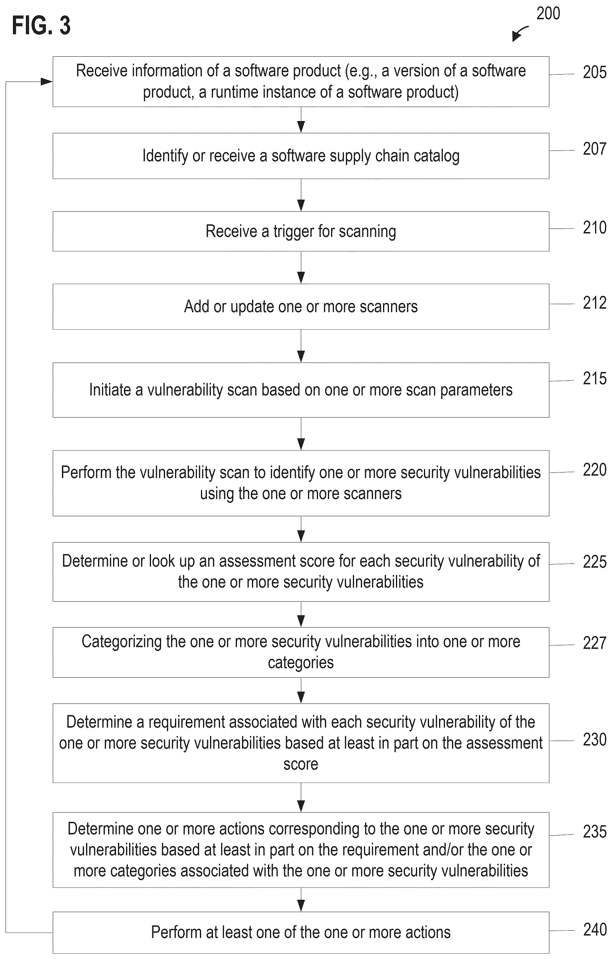

FIG. 3 is a simplified diagram showing a method 200 for managing software security or vulnerability according to certain embodiments of the present disclosure. This diagram is merely an example. One of ordinary skill in the art would recognize many variations, alternatives, and modifications. The method 200 for managing software security includes processes 205, 207, 210, 212, 215, 220, 225, 227, 230, 235, and 240. Although the above has been shown using a selected group of processes for the method 200 for managing software security, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 800). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 205, the system receives information of a software product (e.g., a version of a software product, a runtime instance of a software product). In certain embodiments, the information includes deployment information (e.g., runtime environment) for the software product. In some embodiments, the information includes a version of the software product. In certain embodiments, the information includes subscription information.

According to certain embodiments, at process 207, the system identifies or receives a software supply chain catalog. In some embodiments, the software supply chain catalog includes one or more container images corresponding to the software product. In certain embodiments, the software supply chain catalog includes a list of software artifacts. In some embodiments, the software supply chain catalog includes a list of software artifacts that are registered.

According to some embodiments, at process 210, the system receives a trigger for scanning. In certain embodiments, the trigger is a new version of a software product that becomes available. In some embodiments, the trigger is a new deployment of a software product. In certain embodiments, the trigger is a new security vulnerability being discovered, where the new security vulnerability is associated with a software artifact known to be used in a software product. In some embodiments, a software product has a list of software artifacts corresponding to a version and/or a deployment instance. In certain embodiments, artifacts are software components in the software product. In some embodiments, the list of software artifacts is generated based at least in part on a container image. In certain embodiments, the list of software artifacts is generated by software registration. In some embodiments, the trigger is a trigger by a time associated with periodic scanning (e.g., every day, every week).

According to certain embodiments, at process 212, the system adds or updates one or more scanners. In some embodiments, a scanner is added to the suite of scanners. In certain embodiments, a scanner is updated. In some embodiments, the one or more scanners are selected based on one or more requirements for the software product.

According to some embodiments, at process 215, the system initiates a vulnerability scan to a software product based on one or more scan parameters. In some embodiments, the vulnerability scan is conducted to a plurality of runtime instances of the software product. In certain embodiments, the one or more scanning parameters include a timing parameter, an environment parameter, a product parameter, and/or the like. In some embodiments, a timing parameter includes, for example, a frequency of scanning, a minimum interval between two adjacent scans, and/or the like. In certain embodiments, the environment parameter includes a parameter associated with a runtime environment (e.g., a testing environment, a production environment, a developer environment, etc.). In some embodiments, the product parameter includes a parameter associated with the software product (e.g., version).

According to certain embodiments, at process 220, the system performs the vulnerability scan on the software product to identify one or more security vulnerabilities using one or more scanners. In certain embodiments, the one or more scanners include a scanner for container images, a scanner for software dependencies, a scanner for malware, and/or the like. In some embodiments, the one or more scanners include a scanner integrated with an instance of the software product. In certain embodiments, the one or more scanners include a scanner integrated with an instance of the software product in a runtime environment. In some embodiments, the system performs the vulnerability scan using the software supply chain catalog, where at least one of the one or more identified security vulnerabilities is associated with one of the one or more registered software components in the software supply chain catalog.

According to some embodiments, at process 225, the system determines or looks up an assessment score for each security vulnerability of the one or more security vulnerabilities. In some embodiments, the assessment score is a CVE (Common Vulnerability Exposure) score. In certain embodiments, the assessment score is retrieved from a database (e.g., a database of an organization). For example, the assessment score has a score range including a low score representing least critical vulnerability and a high score representing most critical vulnerability.

According to certain embodiments, at process 227, the system categorizes the one or more security vulnerabilities into one or more categories. In some embodiments, the one or more categories include a vendor dependency category, a false positive category, a recasted risk category, an accepted risk category, a base image category, and/or the like. In certain embodiments, a vendor dependency category refers that a fix has not yet been released by the responsible third-party vendor. In some embodiments, a false positive category refers that a vulnerability detection is incorrect. In certain embodiments, a recasted risk category refers that a vulnerability is recast to a different criticality rating, based on available mitigations and other factors. In some embodiments, an accepted risk category refers that a vulnerability is accepted for a period outside of security requirements. In certain embodiments, a base image category refers to a vulnerability in a published container originating from the base image it uses.

According to some embodiments, at process 230, the system determines a requirement associated with each security vulnerability of the one or more identified security vulnerabilities based at least in part on the assessment scores. In certain embodiments, the requirement includes a requirement associated with an SLA requirement, for example, a clause in the SLA. In some embodiments, the requirement includes a requirement associated with a runtime environment. In certain embodiments, the requirement includes a contractual requirement. In some embodiments, the requirement includes a regulatory requirement. In certain embodiments, the requirement includes a parameter indicative of a permitted time period to address a vulnerability.

In some embodiments, the requirement includes a parameter indicative of a permitted time period to address a vulnerability for a corresponding assessment score. In certain examples, the requirement includes a first time period for addressing a vulnerability at a first assessment score and a second time period, different from the first time period, for addressing the vulnerability at a second assessment score. In some examples, the first assessment score is indicative of higher criticality for the vulnerability than the second assessment score, and the first time period is shorter than the second time period.

In certain embodiments, the system determines a requirement based in part on an assessment score associated with an identified security vulnerability. In some embodiments, the system determines a first requirement associated with a first identified security vulnerability and a second requirement associated with a second identified security vulnerability, where the second requirement is different from the first requirement. In certain embodiments, the system determines a first requirement associated with a security vulnerability at a first assessment score and a second requirement associated with the security vulnerability at a second assessment score, where the second requirement is different from the first requirement. In some embodiments, the second requirement is different from the first requirement in a required time for an action to be taken.

According to some embodiments, at process 235, the system determines one or more actions (e.g., remedial actions) corresponding to the one or more identified security vulnerabilities based at least in part on the requirements and/or the one or more categories associated with the one or more security vulnerabilities. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, at process 240, the system performs at least one of one or more actions corresponding to the one or more identified security vulnerabilities. In some embodiments, the system performs one or more actions at one or more runtime instances of the software product. In certain embodiments, the system performs a first action to a first runtime instance of the software product and a second action to a second runtime instance of the software product, where the first action is different from the second action. According to some embodiments, the system continuously performs the scanning process, for example, by going back to process 205. In certain embodiments, the system performs a vulnerability scanning process before every software deployment.

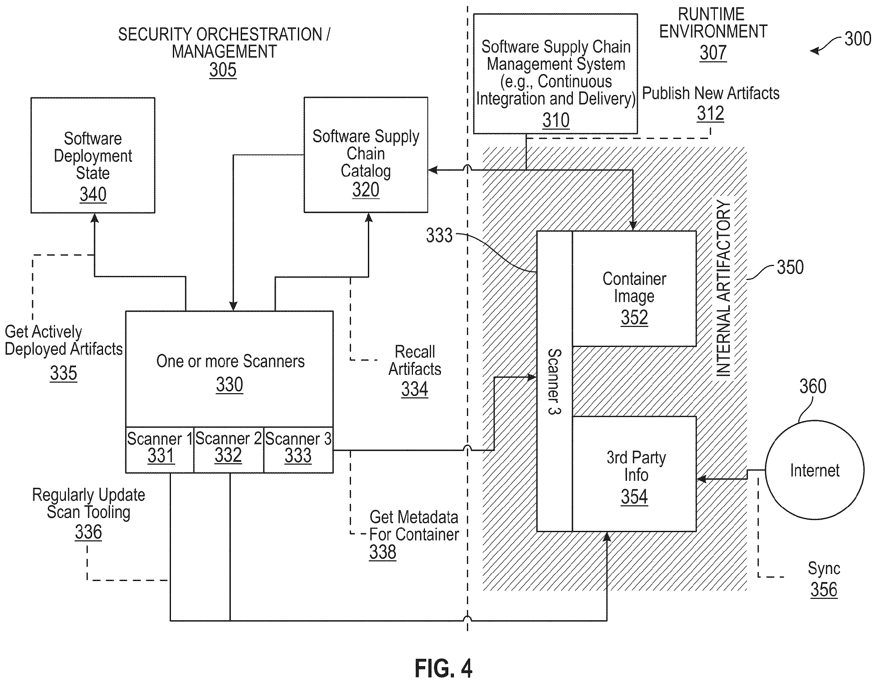

FIG. 4 is an illustrative example of a software architecture 300 integrating software security management and software supply chain management according to certain embodiments of the present disclosure. FIG. 4 is merely an example. One of the ordinary skilled in the art would recognize many variations, alternatives, and modifications.

According to certain embodiments, effective vulnerability management is a cornerstone of any established security program. In some embodiments, for complex cloud software providers, staying on top of vulnerabilities and quickly remediating them is important (e.g., critical). In certain embodiments, if undetected or unmitigated, vulnerabilities in container images and software dependencies can rapidly become a blind spot that may be exploited. In some embodiments, increasingly complex software and infrastructure rely on ever-growing inventories of third-party libraries, where manually scanning and individually remediating vulnerabilities in dependencies is no longer sufficient. In certain embodiments, enterprises desire to programmatically identify and quantify their exposure to security vulnerabilities, prioritize remediation, and enforce fix timeframes for vulnerabilities.

According to some embodiments, some software systems (e.g., software solutions, software platforms) are used widely (e.g., worldwide) and customers rely on the software systems to safeguard their data against threats. In certain embodiments, the software system includes one or more vulnerability scanners 330 (e.g., continuous vulnerability scanner, container vulnerability scanner or CVS). In some embodiments, the vulnerability scanners 330 include three or more scanners (e.g., scanner 331, scanner 332, scanner 333). In certain examples, the vulnerability scanners 330 are run in a standalone vulnerability scanning service. In some embodiments, the one or more scanners 330 receive metadata for container 338, for example, using the scanner 333.

In certain embodiments, the software supply chain management system 310 can manage deployment of a software product in a runtime environment 307, also referred to as an environment. In some embodiments, the system 310 can maintain and/or obtain an artifact inventory 350 and container images 352 (e.g., container registry, registration of container components, software artifacts). In some embodiments, the system 310 can publish new artifacts 312, for example, for a new version of a software product in a runtime environment 307. In certain embodiments, the one or more vulnerability scanners include a scanner 333 integrated into the software product and runtime environment 307 (e.g., an instance of a software product, an instance of a specific version of a software product), for example, a software deployment solution, a software supply chain management solution, to streamline and even automate vulnerability remediation efforts. In some embodiments, the scanner can receive information on software artifacts used in the software product in the runtime environment 307 via third-party information system 354, for example, via internet 360 and/or a synchronization service 356. In certain embodiments, the scanner 333 can scan container images (e.g., container registry) and/or software artifacts to detect vulnerabilities.

According to certain embodiments, the system can surpass security requirements, and/or comply with accredited security frameworks in the field. For example, the runtime environment 307 is certified for a certain impact level (e.g., FedRAMP Moderate/DoD Impact Level 5 (IL5)); by extension, a security orchestration/management engine 305 (e.g., a software service), for example, including the one or more scanners 330 (e.g., CVS), is designed to meet or exceed the certain impact level vulnerability management requirements across various runtime environments (e.g., production environments). In some embodiments, these requirements (e.g., security requirements, requirements in service level agreements (SLAs)) dictate considerations such as authenticated scanning, CVE numbering and CVSS (common vulnerability scoring system) risk scoring, signature updates, and asset identification.

According to some embodiments, at a high level, the security orchestration and/or management system (e.g., security orchestration and/or management engine) 305 ensures that software components and products meet security requirements by one or more of:
- Collecting and managing (e.g., centrally) software and vulnerabilities to simplify tracking and remediation efforts;
- Scanning containers to detect vulnerabilities in container layers and malicious software;
- Scanning product artifacts for known dependency vulnerabilities;
- Fixing all identified issues within service-level agreements (SLAs), with any breach of resolution timeline automatically preventing impacted assets from being deployed; and
- Requiring a review process (e.g., stringent review process) for all exceptions and accepted risks. In some embodiments, any findings that have been suppressed must also define an expiration date for the suppression, which mandates periodic re-review and re-acceptance.

According to certain embodiments, the security orchestration and/or management system (e.g., security orchestration and/or management engine) 305 can enforce security requirements (e.g., requirements in SLAs) for vulnerability remediation. In certain embodiments, while these SLAs include a time (e.g., a maximum time) permitted to address a vulnerability, the engine can fix them within the permitted time. In some embodiments, the system can prioritize detected security vulnerabilities, for example, prioritize critical and high vulnerabilities for expedient mitigation and remediation when they are detected.

As an example, for security vulnerabilities on underlying infrastructure, containers, or hosts, the system can use the following SLAs and corresponding time periods: critical: 72 hours; high: 30 days; medium: 90 days; and low:120 days.

For example, for security vulnerabilities in software products that may be significantly more complicated to remediate, the system can use the following SLAs and corresponding time periods: critical: 30 days; high: 30 days; medium: 90 days; and low: 120 days.

According to some embodiments, the security orchestration and/or management system 305 (e.g., the engine) can manage and integrate multiple vulnerability scanners 330 (e.g., in CVS). In certain embodiments, the security orchestration and management system 305 is a framework that allows for implementation of multiple scanners. In some embodiments, the system 305 can regularly update scan tooling 336. In certain embodiments, when the security requirements shift over time, the system 305 can add a new scanner to perform a discrete function, and then use the output of that scanner as part of conditional logic downstream. In some embodiments, the system 305 can recall artifacts 334 and also provide actively deployed artifacts 335 to the software deployment state 340.

According to certain embodiments, the system uses three or more scanners. For example, the scanners include a scanner to scan a container image to detect known CVEs (common vulnerability exposure) in underlying layers and components included within the container. As an example, the scanners include a scanner to scan a container image to detect known malware and other threats. In some examples, a scanner can be used with an open-source rules engine, commercial rules, and/or custom rules authored by a security team. In certain embodiments, one or more scanners provide a first pass at using signatures to detect anomalous or malicious files present in shipped containers. In some embodiments, the one or more scanners 330 include a software composition analysis tool 333 (e.g., scanner, Xray). In certain embodiments, the scanner can scan different types of artifacts to detect known vulnerabilities in the artifact's dependencies. In some embodiments, artifacts are software components in the software products. In certain embodiments, the scanner can offer a comprehensive dependency scan coverage of all applications deployed, agnostic of the source code language (e.g., Java, JavaScript, Go, and Rust).

According to some embodiments, the software supply chain management system 310 can provide continuous integration and/or delivery. In certain embodiments, in a container-based cloud deployment architecture, the system can use container images 352, such as minimized container images, based at least in part on underlying infrastructure and hosts. In some embodiments, all hosts within a container-based environment are ephemeral, such that they are built, destroyed, and rebuilt at regular intervals. In certain embodiments, an up-to-date container image 352 is maintained with the latest version of the software product (e.g., latest patches), for example, to guarantee that hosts will be patched at least every time they are rebuilt. In some embodiments, this method of container image management allows the system to ensure that every host is appropriately updated and scanned by the one or more scanners 330 prior to deployment.

According to certain embodiments of using application containers, the system 310 can use, manage and/or maintain a container image (e.g., a scratch-based image). In some embodiments, the container has a minimized footprint to reduce the attack surface of packages that are not strictly necessary. For example, a standard container might contain about 90 packages, a minimized container image ships with 6 packages. In some examples, the minimized container image does not include shells, package managers, and/or any other packages.

According to some embodiments, using a minimized container image as the starting point can reduce the application attack surface and eliminate a swath of vulnerabilities. In certain embodiments, this approach ensures the system will focus limited resources and effort on applicable security defects, rather than on remediating ancillary packages or dependency vulnerabilities that have no security impact on the products.

According to certain embodiments, the security orchestration and management system 305 can perform software supply chain catalog scanning. In some embodiments, the software in a runtime environment 307 is managed via the software supply chain management system 310 (e.g., a software deployment system). In certain embodiments, each individual software component (e.g., a software artifact, an artifact, a software service, a software microservice, etc.) to be deployed in the runtime environment is first registered in the software supply chain catalog. In some embodiments, the components (e.g., artifacts) registered in the software supply chain catalog 320 are received by the one or more enrolled in CVS and are required to meet specific security criteria before it is deployed to any environment.

According to some embodiments, every version of every software component released receives a vulnerability scan when initially added to the software supply chain catalog. In certain embodiments, every version of every software component must continually meet the security requirements (e.g., requirements in SLAs). In some embodiments, the system 305 is scalable (e.g., highly scalable) and automated, such that it can provide guarantees on security baselines across runtime environments 307 (e.g., runtime environments managed by the software supply chain management system).

According to certain embodiments, the system 305 can perform software recalls on one or more detected vulnerabilities. In some embodiments, the system 305 can perform software suppressions on one or more detected vulnerabilities. In certain embodiments, a software recall includes a rollback to a previous version. In some embodiments, the exact behavior is configurable to meet specific needs, but by default, artifacts marked as recalled cannot be deployed, either by an installation or by an upgrade. Instead, in certain embodiments, the artifacts will remain on their existing version until a new, non-recalled version is released. In some embodiments, a recall action includes a pause to software deployment. In some embodiments, a suppression action includes temporarily suppressing the one or more detected vulnerabilities. In certain embodiments, a suppression action includes suppressing the one or more detected vulnerabilities in a predetermined time period.

According to some embodiments, policy-based enforcement of remediation SLAs can be insufficient. In certain embodiments, the conventional system has high uptime requirements, the testing required to safely patch in place, and coordination of maintenance windows makes human intervention impossible to scale. In some embodiments, the security orchestration and management system 305 and the software supply chain management system 310 can work together to automatically take action based upon scan results and logical rules.

According to certain embodiments, if a container or artifact scan fails a vulnerability scan, the respective product is automatically marked as recalled in the system 305. In some embodiments, this checkpoint ensures that if a vulnerability is introduced in a new product version, the software product can avoid being susceptible to vulnerabilities when deployed in various runtime environments (e.g., across the fleet). In certain embodiments, whenever the recalled version is also the latest version in the product catalog, a product support ticket is filed, which is routed immediately to the product owner for the recalled service. In some embodiments, this escalates the issue directly to the team, at an appropriate priority level, to intervene and determine the short-term and/or long-term fixes. In certain embodiments, by placing responsibility for vulnerability management early in the build pipeline, this approach incentivizes that the dependencies are kept up-to-date and provides flexibility for remediation.

According to some embodiments, there are edge cases, such as identified vulnerabilities being false positive, software products and/or artifacts being inappropriately marked as vulnerable, patches for fixing vulnerabilities not existing, and/or the like. In certain embodiments, the security orchestration and management system 305 has a flexible suppression feature set that allows for handling these edge cases in a time-bound and risk-adjusted way.

According to certain embodiments, at least a part or all suppressions of identified vulnerabilities require manual review and approval (e.g., by the security team). In some embodiments, these suppressions are periodically reviewed by the compliance team to ensure the software product meets regulatory and compliance requirements. In certain embodiments, a suppression is specified using a structured format.

An example suppression includes:
CVE-2022-XXXX:
category: VENDOR_DEPENDENCY
rationale: package-name | No stable vendored fix available yet valid-until: "2022-10-15" # One month from now.

In this example, the specific CVE has been requested for a temporary 30-day suppression, as no vendor fix is yet available. After the valid-until date expires, the suppression is automatically removed, and the system can begin its recall process (e.g., with no warning).

According to some embodiments, categories that may be considered for suppression include:
- Vendor Dependency: A fix has not yet been released by the responsible third-party vendor.
- False Positive: A vulnerability detection is demonstrably incorrect.
- Recasted Risk: A vulnerability is recast to a different criticality rating, based on available mitigations and other factors.
- Accepted Risk: A vulnerability may need to be accepted for a period outside of security requirements (e.g., requirements in SLA) due to external factors (e.g., complexity in remediation, infrastructure migration, etc.).
- Base Image: A vulnerability in a published container originates from the base image it uses. Given that there are many downstream containers that use the same base image, a vulnerability that affects one of the base images can in turn be present in many others. This type of suppression is thus used to suppress a vulnerability that does not have a good fix in one of the base images, to prevent product recalling in all the images that use it.

According to certain embodiments, having a robust, auditable, reviewed suppression and recall system allows users to quickly track and fix commonplace patches in the software products, while allowing the security team to focus more deeply on the most critical vulnerabilities impacting the product fleet.

According to some embodiments, the security scanners are instrumental for meeting and/or exceeding the security requirements and expectations in various runtime environments (e.g., cloud environments, software-as-a-service environments, on-premises environments). In certain embodiments, the security orchestration and management system 305 can improve patching velocity, increase confidence that security controls are applied uniformly and effectively, and improve the ability to respond to security defects in products and infrastructure.

According to certain embodiments, the system 305 includes configurable controls and rules logic, and allows multi-party reviews and/or approvals. In some embodiments, the system 305 can use native software bill of material (SBOM) generation and validation. In certain embodiments, to protect the software supply chain, the system can enforce security controls which guarantee provenance and integrity for published software artifacts, to better withstand supply chain attacks that commonly target software companies.

According to some embodiments, the security orchestration and management system 305 can regularly update scan tooling 336 (e.g., add additional scanners). For example, the system can use YARA rules to hunt for malicious and anomalous implants and malware across the product fleet globally. In some examples, the one or more scanners 330 include a native YARA scanner, which can allow network defenders better insight and protection against actors attempting to insert malicious code into containers and software, for instance.

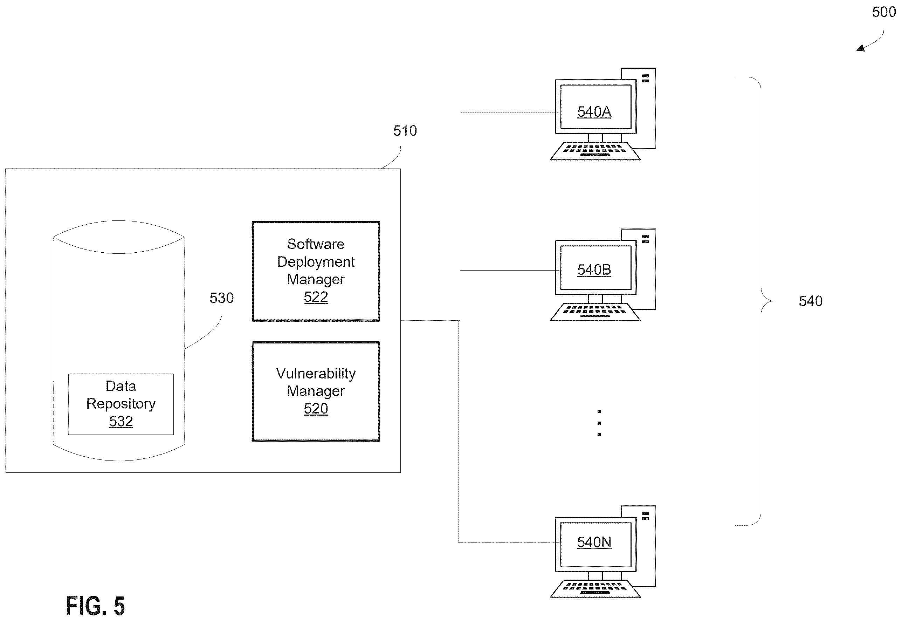

FIG. 5 is an illustrative example of vulnerability management environment 500, according to certain embodiments of the present disclosure. FIG. 5 is merely an example. One of the ordinary skilled in the art would recognize many variations, alternatives, and modifications. According to certain embodiments, vulnerability management environment 500 includes a vulnerability management system 510 and one or more runtime environments 540 (e.g., runtime environment 540A, runtime environment 540B, . . . , runtime environment 540N). In some embodiments, the vulnerability management system 510 includes a vulnerability manager 520, a software deployment manager 522, and a repository 530. In certain embodiments, some components of the vulnerability management system 510 are included in one or more runtime environments 540.

Although the above has been shown using a selected group of components in the vulnerability management environment 500, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the vulnerability management system 510 receives information associated with a software product (e.g., a version of a software product, a runtime instance of a software product). In certain embodiments, the information includes deployment information (e.g., runtime environment) for the software product. In some embodiments, the information includes a version of the software product. In certain embodiments, the information includes subscription information.

According to certain embodiments, the vulnerability management system 510 and/or the software deployment manager 522 identifies or receives a software supply chain catalog. In some embodiments, the software supply chain catalog includes one or more container images corresponding to the software product. In certain embodiments, the software supply chain catalog includes a list of software artifacts. In some embodiments, the software supply chain catalog includes a list of software artifacts that are registered. In certain embodiments, the software supply chain catalog is stored in the data repository 532.

According to some embodiments, the vulnerability management system 510 and/or the vulnerability manager 520 receives a trigger for scanning. In certain embodiments, the trigger is a new version of a software product that becomes available. In some embodiments, the trigger is a new deployment of a software product. In certain embodiments, the trigger is a new security vulnerability being discovered, where the new security vulnerability is associated with a software artifact known to be used in a software product. In some embodiments, a software product has a list of software artifacts corresponding to a version and/or a deployment instance. In certain embodiments, artifacts are software components in the software product. In some embodiments, the list of software artifacts is generated based at least in part on a container image. In certain embodiments, the list of software artifacts is generated by software registration. In some embodiments, the trigger is a trigger by a time associated with periodic scanning (e.g., every day, every week).

According to certain embodiments, the vulnerability management system 510 and/or the vulnerability manager 520 adds or updates one or more scanners. In some embodiments, a scanner is added to the suite of scanners. In certain embodiments, a scanner is updated. In some embodiments, the one or more scanners are selected based on one or more requirements for the software product.

According to some embodiments, the vulnerability management system 510 and/or the vulnerability manager 520 initiates a vulnerability scan to a software product based on one or more scan parameters. In some embodiments, the vulnerability scan is conducted to a plurality of runtime instances of the software product. In certain embodiments, the one or more scanning parameters include a timing parameter, an environment parameter, a product parameter, and/or the like. In some embodiments, a timing parameter includes, for example, a frequency of scanning, a minimum interval between two adjacent scans, and/or the like. In certain embodiments, the environment parameter includes a parameter associated with a runtime environment (e.g., a testing environment, a production environment, a developer environment, etc.). In some embodiments, the product parameter includes a parameter associated with the software product (e.g., version).

According to certain embodiments, the vulnerability management system 510 and/or the vulnerability manager 520 performs the vulnerability scan on the software product to identify one or more security vulnerabilities using one or more scanners. In certain embodiments, the one or more scanners include a scanner for container images, a scanner for software dependencies, a scanner for malware, and/or the like. In some embodiments, the one or more scanners include a scanner integrated with an instance of the software product. In certain embodiments, the one or more scanners include a scanner integrated with an instance of the software product in a runtime environment. In some embodiments, the vulnerability management system 510 and/or the vulnerability manager 520 performs the vulnerability scan using the software supply chain catalog, where at least one of the one or more identified security vulnerabilities is associated with one of the one or more registered software components in the software supply chain catalog.

According to some embodiments, the vulnerability management system 510 and/or the vulnerability manager 520 determines or looks up an assessment score for each security vulnerability of the one or more security vulnerabilities. In some embodiments, the assessment score is a CVE (Common Vulnerability Exposure) score. In certain embodiments, the assessment score is retrieved from a database (e.g., a database of an organization). For example, the assessment score has a score range including a low score representing least critical vulnerability and a high score representing most critical vulnerability.

According to certain embodiments, the vulnerability management system 510 and/or the vulnerability manager 520 categorizes the one or more security vulnerabilities into one or more categories. In some embodiments, the one or more categories include a vendor dependency category, a false positive category, a recasted risk category, an accepted risk category, a base image category, and/or the like.

According to some embodiments, the vulnerability management system 510 and/or the vulnerability manager 520 determines a requirement associated with each security vulnerability of the one or more identified security vulnerabilities based at least in part on the assessment scores. In certain embodiments, the requirement includes a requirement associated with an SLA requirement, for example, a clause in the SLA. In some embodiments, the requirement includes a requirement associated with a runtime environment. In certain embodiments, the requirement includes a contractual requirement. In some embodiments, the requirement includes a regulatory requirement. In certain embodiments, the requirement includes a parameter indicative of a permitted time period to address a vulnerability.

In some embodiments, the requirement includes a parameter indicative of a permitted time period to address a vulnerability for a corresponding assessment score. In certain examples, the requirement includes a first time period for addressing a vulnerability at a first assessment score and a second time period, different from the first time period, for addressing the vulnerability at a second assessment score. In some examples, the first assessment score is indicative of higher criticality for the vulnerability than the second assessment score, and the first time period is shorter than the second time period.

In certain embodiments, the vulnerability management system 510 and/or the vulnerability manager 520 determines a requirement based in part on an assessment score associated with an identified security vulnerability. In some embodiments, the vulnerability management system 510 and/or the vulnerability manager 520 determines a first requirement associated with a first identified security vulnerability and a second requirement associated with a second identified security vulnerability, where the second requirement is different from the first requirement. In certain embodiments, the vulnerability management system 510 and/or the vulnerability manager 520 determines a first requirement associated with a security vulnerability at a first assessment score and a second requirement associated with the security vulnerability at a second assessment score, where the second requirement is different from the first requirement. In some embodiments, the second requirement is different from the first requirement in a required time for an action to be taken.

According to some embodiments, the vulnerability management system 510 and/or the vulnerability manager 520 determines one or more actions (e.g., remedial actions) corresponding to the one or more identified security vulnerabilities based at least in part on the requirements and/or the one or more categories associated with the one or more security vulnerabilities. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, the vulnerability management system 510 and/or the vulnerability manager 520 performs at least one of one or more actions corresponding to the one or more identified security vulnerabilities. In some embodiments, the vulnerability management system 510 and/or the vulnerability manager 520 performs one or more actions at one or more runtime instances of the software product. In certain embodiments, the vulnerability management system 510 and/or the vulnerability manager 520 performs a first action to a first runtime instance of the software product and a second action to a second runtime instance of the software product, where the first action is different from the second action. According to some embodiments, the vulnerability management system 510 and/or the vulnerability manager 520 continuously performs the scanning process.

According to certain embodiments, the vulnerability management system 510 and/or the vulnerability manager 520 receives a plurality of vulnerability scan results associated with a plurality of software releases. In some embodiments, the plurality of vulnerability scan results is obtained by a plurality of vulnerability scans. In certain embodiments, the vulnerability management system 510 and/or the vulnerability manager 520 stores the plurality of vulnerability scan results to a data repository (e.g., the data repository 532). In some embodiments, a vulnerability scan result includes one or more indications of one or more scanned vulnerabilities, one or more indications of one or more software artifacts, one or more indications of one or more software releases, and/or the like. In certain embodiments, a scanned vulnerability is also referred to as a security vulnerability. In some embodiments, a scan result includes one or more security vulnerabilities, one or more assessment scores associated with the one or more security vulnerabilities, one or more requirements associated with the one or more security vulnerabilities, and/or one or more actions associated with the one or more security vulnerabilities.

In certain embodiments, the vulnerability management system 510 and/or the vulnerability manager 520 obtains one or more assessment scores associated with the one or more scanned vulnerabilities. In some embodiments, the assessment score is a CVE (Common Vulnerability Exposure) score. In certain embodiments, the assessment score is retrieved from a database (e.g., a database of an organization). For example, the assessment score has a score range that includes a low score representing the least critical vulnerability and a high score representing the most critical vulnerability.

According to some embodiments, the vulnerability management system 510 and/or the vulnerability manager 520 obtains software installation information associated with a plurality of software installations in a plurality of environments. In certain embodiments, the plurality of software installations are associated with the plurality of software releases. For example, a software installation indicates a software release installed in a runtime environment. In some embodiments, the software installation information is obtained from a software deployment system.

According to certain embodiments, the vulnerability management system 510 and/or the vulnerability manager 520 generates and/or updates a plurality of software vulnerabilities based on the plurality of vulnerability scan results and the software installation information. In certain embodiments, each software vulnerability of the plurality of software vulnerabilities includes a vulnerability identifier, a software release identifier, and an environment identifier. In some embodiments, a vulnerability identifier includes a vulnerability code (e.g., a CVE code, etc.) that is a part of a scanned vulnerability, for example, from a scanner. In certain embodiments, a software release identifier includes a link to a software release and/or a software product from the software deployment system.

According to some embodiments, the vulnerability management system 510 and/or the vulnerability manager 520 presents and/or causes to present the plurality of software vulnerabilities. In certain embodiments, the vulnerability management system 510 and/or the vulnerability manager 520 receives a query from a user. In some embodiments, the vulnerability management system 510 and/or the vulnerability manager 520 selects a subset of software vulnerabilities from the plurality of software vulnerabilities based on the query.

In certain embodiments, the query includes an indicator of a software release or an environment. In some embodiments, the vulnerability management system 510 and/or the vulnerability manager 520 selects the subset of software vulnerabilities based at least in part on the software release or the environment. In certain embodiments, a software release is impacted by a scanned vulnerability if a software artifact in the software release is impacted by the scanned vulnerability. In some embodiments, a runtime environment is impacted if at least one software release in the runtime environment is impacted. In certain embodiments, the vulnerability management system 510 and/or the vulnerability manager 520 identifies one or more software releases that are impacted by the scanned vulnerability based at least in part on the plurality of scan results. In some embodiments, a representation of a software vulnerability includes a vulnerability identifier, a description, a severity indicator, a number of impacted software releases, a number of impacted environments and/or the like.

In some embodiments, the query includes a severity rating. In certain embodiments, a security rating includes at least one selected from a critical rating, a high rating, a medium rating, a low rating, and/or the like. In some embodiments, a security rating is determined based on one or more assessment scores. In some embodiments, the vulnerability management system 510 and/or the vulnerability manager 520 selects the subset of software vulnerabilities based at least in part on the severity rating.

According to certain embodiments, the vulnerability management system 510 and/or the vulnerability manager 520 generates a response including a representation of the selected subset of software vulnerabilities. In some embodiments, the vulnerability management system 510 and/or the vulnerability manager 520 presents or causes to present the representation of the subset of software vulnerabilities. In certain embodiments, the vulnerability management system 510 and/or the vulnerability manager 520 generates a representation of a software vulnerability. In some embodiments, the representation of a software vulnerability includes a vulnerability identifier, a description, a severity indicator, a number of impacted resources, and/or the like. In certain embodiments, a number of impacted resources includes a number of software releases, a number of impacted environments, and/or the like.

In certain embodiments, a representation of a software vulnerability includes a vulnerability status. In some embodiments, the vulnerability status includes at least one selected from an indication of a number of active vulnerabilities associated with a software vulnerability, an indication of a number of pending suppression actions associated with a software vulnerability, and a number of a type of action taken associated with a software vulnerability. In certain embodiments, the subset of software vulnerabilities includes a first software vulnerability and a second software vulnerability. In some examples, the first software vulnerability includes a first vulnerability identifier and a first software release identifier. In certain examples, the second software vulnerability includes the first vulnerability identifier and a second software release identifier. In some examples, the first software release identifier is different from the second software release identifier.

FIG. 6 illustrates an example user interface 600 for presenting software vulnerabilities according to certain embodiments of the present disclosure. FIG. 6 is merely an example. One of ordinary skill in the art would recognize many variations, alternatives, and modifications. In the example illustrated, a list of representations of software vulnerabilities is presented at the user interface 600. In some examples, the representation of a software vulnerability includes a set of vulnerability information 610, a severity indicator 620, and a summary of affected resources 630. In certain examples, the set of vulnerability information 610 includes a vulnerability identifier, a description, and one or more vulnerability statuses. For example, a vulnerability status includes a number of active vulnerabilities that have not been addressed, a number of pending suppression actions, a number of suppression actions that have caused the vulnerability to be suppressed, a number of vulnerabilities in grace period, a number of vulnerabilities that are overdue, and/or the like. In some examples, the summary of affected resources 630 includes a number of impacted software releases, a number of impacted environments, and/or the like.

According to some embodiments, a user can provide input and/or make a selection from the user interface. For example, a user can select a software vulnerability, and the vulnerability management system 510 and/or the vulnerability manager 520 can generate more detailed information about the software vulnerability. As an example, a user can select a software release and/or a runtime environment, and the vulnerability management system 510 and/or the vulnerability manager 520 can generate more detailed information about the software release and/or the runtime environment. For example, the vulnerability management system 510 and/or the vulnerability manager 520 can generate a list of software vulnerabilities that impact the software release and/or the runtime environment.

FIG. 7 illustrates an example user interface 700 for presenting software vulnerabilities 710 according to certain embodiments of the present disclosure. FIG. 7 is merely an example. One of ordinary skill in the art would recognize many variations, alternatives, and modifications. In the example illustrated, the vulnerability management system 510 and/or the vulnerability manager 520 provides more detailed information about the software vulnerability. For example, the vulnerability management system 510 and/or the vulnerability manager 520 provides the representation 720 of the software vulnerability in response to selecting the software vulnerability. As an example, the representation 720 of the software vulnerability is overlayed on the list of software vulnerabilities 710. In some examples, the representation 720 of the software vulnerability includes a vulnerability identifier 722, a vulnerability description 724, a severity indicator 725, an assessment score 726, one or more findings 727, and a summary of affected resources 728.

In some examples, scanners run on regular cadence and identify specific vulnerabilities that are present in artifacts that are part of the software releases. In certain examples, this is determined by checking the artifacts which are defined as part of the software release manifest. In some embodiments, one or more instances of vulnerabilities in a specific context are called findings. In certain embodiments, the vulnerability management system 510 and/or the vulnerability manager 520 provides aggregate access to findings across a software product, a runtime environment, one or more software installations, and/or the like. In some embodiments, the vulnerability management system 510 and/or the vulnerability manager 520 uses suppression workflows to mute one or more findings at a time, based on the characteristic of the finding that will be surfaced in successive scans. In certain examples, the vulnerability management system 510 and/or the vulnerability manager 520 can select a software release to view the affected artifacts, the vulnerable versions, and a fix version if one is available.

According to some embodiments, the vulnerability management system 510 and/or the vulnerability manager 520 receives an input indicating one or more actions associated with one or more software vulnerabilities in the subset of software vulnerabilities. In certain embodiments, an action includes at least one selected from a group consisting of a recall action, a suppression action, a patch action, and an upgrade action. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, the vulnerability management system 510 and/or the vulnerability manager 520 performs and/or causes to perform at least a part of the one or more actions. In some embodiments, the input includes an indication of a plurality of impacted software releases. In certain embodiments, the vulnerability management system 510 and/or the vulnerability manager 520 causes the action to be taken on the plurality of impacted software releases. In some embodiments, the input includes an indication of an impacted software artifact. In certain embodiments, the vulnerability management system 510 and/or the vulnerability manager 520 causes the action to be taken on a plurality of impacted software releases, where each impacted software release of the plurality of impacted software releases includes the impacted software artifact.

In some embodiments, the input further includes an indication of an impacted environment. In certain embodiments, the vulnerability management system 510 and/or the vulnerability manager 520 causes the action to be taken on a plurality of impacted software releases, each impacted software release of the plurality of impacted software releases being associated with a specified software vulnerability, each impacted software release of the plurality of impacted software releases being hosted in the impacted environment. In certain embodiments, the input includes a specific action to be applied to a software vulnerability and a justification of the specific action. In certain embodiments, the input includes a specific action to be applied to a software vulnerability and a scope of the specific action. In some examples, the scope of an action can be one or more environments, one or more software releases, one or more software artifacts, and/or the like. For example, the input includes a suppression action for a software vulnerability and an environment, and the vulnerability management system 510 and/or the vulnerability manager 520 applies the suppression action to impacted software releases identified in the environment.

In some embodiments, the vulnerability management system 510 and/or the vulnerability manager 520 receives a first input indicating a first action associated with a first software vulnerability. In certain embodiments, the vulnerability management system 510 and/or the vulnerability manager 520 receives a second input indicating a second action associated with the second software vulnerability. In some embodiments, the first action is different from the second action.

According to certain embodiments, the vulnerability management system 510 and/or the vulnerability manager 520 updates the plurality of software vulnerabilities based on the one or more actions. In some embodiments, the vulnerability management system 510 and/or the vulnerability manager 520 receives a completion of an action in a scope and updates the plurality of software vulnerabilities accordingly. In certain embodiments, the vulnerability management system 510 and/or the vulnerability manager 520 receives a failure of an action in a scope and updates the plurality of software vulnerabilities accordingly.

According to some embodiments, the vulnerability management system 510 and/or the vulnerability manager 520 receives and/or accesses one or more requirements. For example, a requirement is a compliance requirement. In certain embodiments, the vulnerability management system 510 and/or the vulnerability manager 520 determines whether a requirement is met based at least in part on the updated plurality of software vulnerabilities. In some embodiments, the vulnerability management system 510 and/or the vulnerability manager 520 continuously receives scan results and continues to process the scan results.

In some embodiments, the repository 530 can include a software supply chain catalog, one or more identified vulnerabilities, one or more software vulnerabilities, one or more software releases, one or more software installations, one or more software products, one or more software artifacts, one or more assessment scores, one or more actions, and/or the like. The repository 530 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the vulnerability management environment 500 can execute software or firmware stored in non-transitory computer-readable medium to implement various processing steps. Various components and processors of the vulnerability management environment 500 can be implemented by one or more computing devices including, but not limited to, circuits, a computer, a cloud-based processing unit, a processor, a processing unit, a microprocessor, a mobile computing device, and/or a tablet computer. In some cases, various components of the vulnerability management environment 500 (e.g., the vulnerability management system 510, runtime environment 540, vulnerability manager 520, the software deployment manager 522) can be implemented on a shared computing device. Alternatively, a component of the vulnerability management environment 500 can be implemented on multiple computing devices. In some implementations, various modules and components of the vulnerability management environment 500 can be implemented as software, hardware, firmware, or a combination thereof. In some cases, various components of the vulnerability management environment 500 can be implemented in software or firmware executed by a computing device.

Various components of vulnerability management environment 500 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standards, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

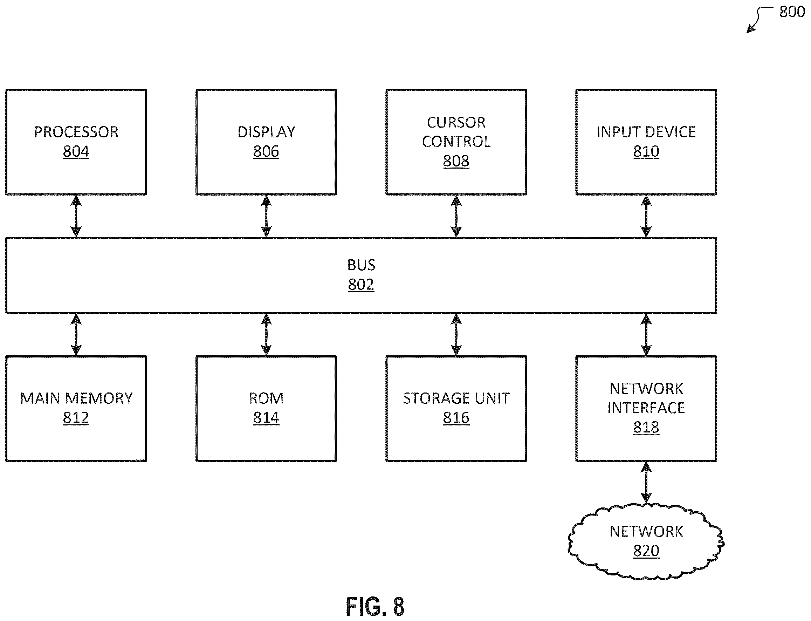

FIG. 8 is a simplified diagram showing a computing system for implementing a system 800 for managing software vulnerability in accordance with at least one example set forth in the disclosure. This diagram is merely an example, which should not unduly limit the scope of the claims. One of ordinary skill in the art would recognize many variations, alternatives, and modifications.

The computing system 800 includes a bus 802 or other communication mechanism for communicating information, a processor 804, a display 806, a cursor control component 808, an input device 810, a main memory 812, a read only memory (ROM) 814, a storage unit 816, and a network interface 818. In some embodiments, some or all processes (e.g., steps) of the methods 1000, 100, and/or 200 are performed by the computing system 800. In some examples, the bus 802 is coupled to the processor 804, the display 806, the cursor control component 808, the input device 810, the main memory 812, the read only memory (ROM) 814, the storage unit 816, and/or the network interface 818. In certain examples, the network interface is coupled to a network 820. For example, the processor 804 includes one or more general purpose microprocessors. In some examples, the main memory 812 (e.g., random access memory (RAM), cache and/or other dynamic storage devices) is configured to store information and instructions to be executed by the processor 804. In certain examples, the main memory 812 is configured to store temporary variables or other intermediate information during execution of instructions to be executed by processor 804. For examples, the instructions, when stored in the storage unit 816 accessible to processor 804, render the computing system 800 into a special-purpose machine that is customized to perform the operations specified in the instructions. In some examples, the ROM 814 is configured to store static information and instructions for the processor 804. In certain examples, the storage unit 816 (e.g., a magnetic disk, optical disk, or flash drive) is configured to store information and instructions.

In some embodiments, the display 806 (e.g., a cathode ray tube (CRT), an LCD display, or a touch screen) is configured to display information to a user of the computing system 800. In some examples, the input device 810 (e.g., alphanumeric and other keys) is configured to communicate information and commands to the processor 804. For example, the cursor control component 808 (e.g., a mouse, a trackball, or cursor direction keys) is configured to communicate additional information and commands (e.g., to control cursor movements on the display 806) to the processor 804.

According to certain embodiments, a method for managing software vulnerability, the method comprising: receiving a plurality of vulnerability scan results associated with a plurality of software releases, each vulnerability scan result including one or more indications of one or more scanned vulnerabilities and one or more indications of one or more software releases; obtaining software installation information associated with a plurality of software installations in a plurality of environments, the plurality of software installations being associated with the plurality of software releases; updating a plurality of software vulnerabilities based on the plurality of vulnerability scan results and the software installation information, each software vulnerability of the plurality of software vulnerabilities including a vulnerability identifier, a software release identifier, and an environment identifier; receiving a query from a user; selecting a subset of software vulnerabilities from the plurality of software vulnerabilities based on the query; and generating a response including a representation of the selected subset of software vulnerabilities. In some embodiments, the method is performed using one or more processors. For example, the method is implemented according to at least FIG. 1, FIG. 2, FIG. 3, FIG. 4, and/or FIG. 5.

In some embodiments, the subset of software vulnerabilities includes a first software vulnerability and a second software vulnerability, wherein the first software vulnerability includes a first vulnerability identifier and a first software release identifier, wherein the second software vulnerability includes the first vulnerability identifier and a second software release identifier, wherein the first software release identifier is different from the second software release identifier. In some embodiments, the method further comprises: receiving a first input indicating a first action associated with the first software vulnerability; receiving a second input indicating a second action associated with the second software vulnerability; wherein the first action is different from the second action.

In some embodiments, the method further comprises: receiving an input indicating an action associated with a first software vulnerability in the subset of software vulnerabilities. In certain embodiments, the input further includes an indication of a plurality of impacted software releases, wherein the method further comprises: causing the action to be taken on the plurality of impacted software releases. In some embodiments, the input further includes an indication of an impacted software artifact, wherein the method further comprises: causing the action to be taken on a plurality of impacted software releases, each impacted software release of the plurality of impacted software releases including the impacted software artifact. In certain embodiments, the input further includes an indication of an impacted environment, wherein the method further comprises: causing the action to be taken on a plurality of impacted software releases, each impacted software release of the plurality of impacted software releases being associated with the first software vulnerability, each impacted software release of the plurality of impacted software releases being hosted in the impacted environment. In some embodiments, the action includes at least one selected from a group consisting of a recall action, a suppression action, a patch action, and an upgrade action.

In certain embodiments, each software vulnerability in the subset of software vulnerabilities includes a vulnerability status, wherein the vulnerability status includes at least one selected from an indication of a number of active vulnerabilities associated with the each software vulnerability, an indication of a number of pending suppression actions associated with the each software vulnerability, and a number of a type of action taken associated with the each software vulnerability. In some embodiments, the software installation information is provided by a software deployment system, wherein a software release identifier includes an indication of a software release provided by the software deployment system. In some embodiments, the method further comprises: generating a representation of at least a first software vulnerability of the subset of software vulnerabilities; wherein the representation includes an indication of a first software vulnerability, a description of the first software vulnerability, a severity indicator, a number of impacted software releases, and a number of impacted environments.

In some embodiments, the query includes an indicator of a software release or an environment; wherein the selecting a subset of software vulnerabilities includes selecting the subset of software vulnerabilities based at least in part on the software release or the environment; wherein the method further comprises generating a representation of a software vulnerability; wherein the representation of the software vulnerability includes a vulnerability identifier, a description, a severity indicator, a number of impacted software releases, and a number of impacted environments. In some embodiments, the method further comprises: receiving an indication of an action associated with a software vulnerability of the plurality of software vulnerabilities; causing to perform the action; and updating the plurality of software vulnerabilities based on the action. In some embodiments, the method further comprises: accessing a requirement; and determining whether the requirement is met based at least in part on the updated plurality of software vulnerabilities.

According to certain embodiments, a system for managing software vulnerability, the system comprising: one or more processors; and one or more memories storing instructions that, when executed by the one or more processors, cause the system to perform a set of operations, the set of operations comprising: receiving a plurality of vulnerability scan results associated with a plurality of software releases, each vulnerability scan result including one or more indications of one or more scanned vulnerabilities and one or more indications of one or more software releases; obtaining software installation information associated with a plurality of software installations in a plurality of environments, the plurality of software installations being associated with the plurality of software releases; updating a plurality of software vulnerabilities based on the plurality of vulnerability scan results and the software installation information, each software vulnerability of the plurality of software vulnerabilities including a vulnerability identifier, a software release identifier, and an environment identifier; receiving a query from a user; selecting a subset of software vulnerabilities from the plurality of software vulnerabilities based on the query; and generating a response including a representation of the selected subset of software vulnerabilities. For example, the method is implemented according to at least FIG. 1, FIG. 2, FIG. 3, FIG. 4, and/or FIG. 5.

In some embodiments, the subset of software vulnerabilities includes a first software vulnerability and a second software vulnerability, wherein the first software vulnerability includes a first vulnerability identifier and a first software release identifier, wherein the second software vulnerability includes the first vulnerability identifier and a second software release identifier, wherein the first software release identifier is different from the second software release identifier. In some embodiments, the set of operations further comprise: receiving a first input indicating a first action associated with the first software vulnerability; receiving a second input indicating a second action associated with the second software vulnerability; wherein the first action is different from the second action.

In some embodiments, the set of operations further comprise: receiving an input indicating an action associated with a first software vulnerability in the subset of software vulnerabilities. In certain embodiments, the input further includes an indication of a plurality of impacted software releases, wherein the set of operations further comprise: causing the action to be taken on the plurality of impacted software releases. In some embodiments, the input further includes an indication of an impacted software artifact, wherein the set of operations further comprise: causing the action to be taken on a plurality of impacted software releases, each impacted software release of the plurality of impacted software releases including the impacted software artifact. In certain embodiments, the input further includes an indication of an impacted environment, wherein the set of operations further comprise: causing the action to be taken on a plurality of impacted software releases, each impacted software release of the plurality of impacted software releases being associated with the first software vulnerability, each impacted software release of the plurality of impacted software releases being hosted in the impacted environment. In some embodiments, the action includes at least one selected from a group consisting of a recall action, a suppression action, a patch action, and an upgrade action.

In certain embodiments, each software vulnerability in the subset of software vulnerabilities includes a vulnerability status, wherein the vulnerability status includes at least one selected from an indication of a number of active vulnerabilities associated with the each software vulnerability, an indication of a number of pending suppression actions associated with the each software vulnerability, and a number of a type of action taken associated with the each software vulnerability. In some embodiments, the software installation information is provided by a software deployment system, wherein a software release identifier includes an indication of a software release provided by the software deployment system. In some embodiments, the set of operations further comprise: generating a representation of at least a first software vulnerability of the subset of software vulnerabilities; wherein the representation includes an indication of a first software vulnerability, a description of the first software vulnerability, a severity indicator, a number of impacted software releases, and a number of impacted environments.

In some embodiments, the query includes an indicator of a software release or an environment; wherein the selecting a subset of software vulnerabilities includes selecting the subset of software vulnerabilities based at least in part on the software release or the environment; wherein the set of operations further comprise generating a representation of a software vulnerability; wherein the representation of the software vulnerability includes a vulnerability identifier, a description, a severity indicator, a number of impacted software releases, and a number of impacted environments. In some embodiments, the set of operations further comprise: receiving an indication of an action associated with a software vulnerability of the plurality of software vulnerabilities; causing to perform the action; and updating the plurality of software vulnerabilities based on the action. In some embodiments, the set of operations further comprise: accessing a requirement; and determining whether the requirement is met based at least in part on the updated plurality of software vulnerabilities.

According to certain embodiments, a non-transitory computer-readable storage medium having instructions for managing software vulnerability that, when executed by one or more processors, cause the one or more processors to perform a set of operations comprising: receiving a plurality of vulnerability scan results associated with a plurality of software releases, each vulnerability scan result including one or more indications of one or more scanned vulnerabilities and one or more indications of one or more software releases; obtaining software installation information associated with a plurality of software installations in a plurality of environments, the plurality of software installations being associated with the plurality of software releases; updating a plurality of software vulnerabilities based on the plurality of vulnerability scan results and the software installation information, each software vulnerability of the plurality of software vulnerabilities including a vulnerability identifier, a software release identifier, and an environment identifier; receiving a query from a user; selecting a subset of software vulnerabilities from the plurality of software vulnerabilities based on the query; and generating a response including a representation of the selected subset of software vulnerabilities. For example, the method is implemented according to at least FIG. 1, FIG. 2, FIG. 3, FIG. 4, and/or FIG. 5.

In some embodiments, the subset of software vulnerabilities includes a first software vulnerability and a second software vulnerability, wherein the first software vulnerability includes a first vulnerability identifier and a first software release identifier, wherein the second software vulnerability includes the first vulnerability identifier and a second software release identifier, wherein the first software release identifier is different from the second software release identifier. In some embodiments, the set of operations further comprise: receiving a first input indicating a first action associated with the first software vulnerability; receiving a second input indicating a second action associated with the second software vulnerability; wherein the first action is different from the second action.

In some embodiments, the set of operations further comprise: receiving an input indicating an action associated with a first software vulnerability in the subset of software vulnerabilities. In certain embodiments, the input further includes an indication of a plurality of impacted software releases, wherein the set of operations further comprise: causing the action to be taken on the plurality of impacted software releases. In some embodiments, the input further includes an indication of an impacted software artifact, wherein the set of operations further comprise: causing the action to be taken on a plurality of impacted software releases, each impacted software release of the plurality of impacted software releases including the impacted software artifact. In certain embodiments, the input further includes an indication of an impacted environment, wherein the set of operations further comprise: causing the action to be taken on a plurality of impacted software releases, each impacted software release of the plurality of impacted software releases being associated with the first software vulnerability, each impacted software release of the plurality of impacted software releases being hosted in the impacted environment. In some embodiments, the action includes at least one selected from a group consisting of a recall action, a suppression action, a patch action, and an upgrade action.

In certain embodiments, each software vulnerability in the subset of software vulnerabilities includes a vulnerability status, wherein the vulnerability status includes at least one selected from an indication of a number of active vulnerabilities associated with the each software vulnerability, an indication of a number of pending suppression actions associated with the each software vulnerability, and a number of a type of action taken associated with the each software vulnerability. In some embodiments, the software installation information is provided by a software deployment system, wherein a software release identifier includes an indication of a software release provided by the software deployment system. In some embodiments, the set of operations further comprise: generating a representation of at least a first software vulnerability of the subset of software vulnerabilities; wherein the representation includes an indication of a first software vulnerability, a description of the first software vulnerability, a severity indicator, a number of impacted software releases, and a number of impacted environments.

In some embodiments, the query includes an indicator of a software release or an environment; wherein the selecting a subset of software vulnerabilities includes selecting the subset of software vulnerabilities based at least in part on the software release or the environment; wherein the set of operations further comprise generating a representation of a software vulnerability; wherein the representation of the software vulnerability includes a vulnerability identifier, a description, a severity indicator, a number of impacted software releases, and a number of impacted environments. In some embodiments, the set of operations further comprise: receiving an indication of an action associated with a software vulnerability of the plurality of software vulnerabilities; causing to perform the action; and updating the plurality of software vulnerabilities based on the action. In some embodiments, the set of operations further comprise: accessing a requirement; and determining whether the requirement is met based at least in part on the updated plurality of software vulnerabilities.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for managing software vulnerability, the method comprising:
receiving a plurality of vulnerability scan results associated with a plurality of software releases, each vulnerability scan result including one or more indications of one or more scanned vulnerabilities and one or more indications of one or more software releases;
obtaining software installation information associated with a plurality of software installations in a plurality of environments, the plurality of software installations being associated with the plurality of software releases;
updating a plurality of software vulnerabilities based on the plurality of vulnerability scan results and the software installation information, each software vulnerability of the plurality of software vulnerabilities including a vulnerability identifier, a software release identifier, and an environment identifier;
receiving a query from a user;
selecting a subset of software vulnerabilities from the plurality of software vulnerabilities based on the query; and
generating a response including a representation of the selected subset of software vulnerabilities;
wherein the method is performed using one or more processors.

2. The method of claim 1, wherein the subset of software vulnerabilities includes a first software vulnerability and a second software vulnerability, wherein the first software vulnerability includes a first vulnerability identifier and a first software release identifier, wherein the second software vulnerability includes the first vulnerability identifier and a second software release identifier, wherein the first software release identifier is different from the second software release identifier.

3. The method of claim 2, further comprising:
receiving a first input indicating a first action associated with the first software vulnerability;
receiving a second input indicating a second action associated with the second software vulnerability;
wherein the first action is different from the second action.

4. The method of any preceding claim, further comprising:
receiving an input indicating an action associated with a first software vulnerability in the subset of software vulnerabilities.

5. The method of claim 4, wherein the input further includes an indication of a plurality of impacted software releases, wherein the method further comprises:
causing the action to be taken on the plurality of impacted software releases.

6. The method of claim 4, wherein the input further includes an indication of an impacted software artifact, wherein the method further comprises:
causing the action to be taken on a plurality of impacted software releases, each impacted software release of the plurality of impacted software releases including the impacted software artifact.

7. The method of claim 4, wherein the input further includes an indication of an impacted environment, wherein the method further comprises:
causing the action to be taken on a plurality of impacted software releases, each impacted software release of the plurality of impacted software releases being associated with the first software vulnerability, each impacted software release of the plurality of impacted software releases being hosted in the impacted environment.

8. The method of any of claims 4 to 7, wherein the action includes at least one selected from a group consisting of a recall action, a suppression action, a patch action, and an upgrade action.

9. The method of any preceding claim, wherein each software vulnerability in the subset of software vulnerabilities includes a vulnerability status, wherein the vulnerability status includes at least one selected from an indication of a number of active vulnerabilities associated with the each software vulnerability, an indication of a number of pending suppression actions associated with the each software vulnerability, and a number of a type of action taken associated with the each software vulnerability.

10. The method of any preceding claim, wherein the software installation information is provided by a software deployment system, wherein a software release identifier includes an indication of a software release provided by the software deployment system.

11. The method of any preceding claim, further comprising:
generating a representation of at least a first software vulnerability of the subset of software vulnerabilities;
wherein the representation includes an indication of the first software vulnerability, a description of the first software vulnerability, a severity indicator, a number of impacted software releases, and a number of impacted environments.

12. The method of any preceding claim, wherein the query includes an indicator of a software release or an environment;
wherein the selecting a subset of software vulnerabilities includes selecting the subset of software vulnerabilities based at least in part on the software release or the environment;
wherein the method further comprises generating a representation of a software vulnerability;
wherein the representation of the software vulnerability includes a vulnerability identifier, a description, a severity indicator, a number of impacted software releases, and a number of impacted environments.

13. The method of any preceding claim, further comprising:
receiving an indication of an action associated with a software vulnerability of the plurality of software vulnerabilities;
causing to perform the action; and
updating the plurality of software vulnerabilities based on the action, and optionally, further comprising:
accessing a requirement; and
determining whether the requirement is met based at least in part on the updated plurality of software vulnerabilities.

14. A system for managing software vulnerability, the system comprising:
one or more processors; and
one or more memories storing instructions that, when executed by the one or more processors, cause the system to perform a set of operations in accordance with the method of any preceding claim.

15. A non-transitory computer-readable storage medium having instructions for managing software vulnerability that, when executed by one or more processors, cause the one or more processors to perform a set of operations comprising:
receiving a plurality of vulnerability scan results associated with a plurality of software releases, each vulnerability scan result including one or more indications of one or more scanned vulnerabilities and one or more indications of one or more software releases;
obtaining software installation information associated with a plurality of software installations in a plurality of environments, the plurality of software installations being associated with the plurality of software releases;
updating a plurality of software vulnerabilities based on the plurality of vulnerability scan results and the software installation information, each software vulnerability of the plurality of software vulnerabilities including a vulnerability identifier, a software release identifier, and an environment identifier;
receiving a query from a user;
selecting a subset of software vulnerabilities from the plurality of software vulnerabilities based on the query; and
generating a response including a representation of the selected subset of software vulnerabilities.
